# EUROPÄISCHE PATENTSCHRIFT

(11) **EP 1 140 529 B1**
(45) Veröffentlichungstag und Bekanntmachung des Hinweises auf die Patenterteilung: **21.06.2006**
(21) Anmeldenummer: 00901498.6
(22) Anmeldetag: 03.01.2000
(51) Int. Cl.: B60G 11/27, F16F 9/05

(54) **FAHRZEUG-ACHSAUFHÄNGUNG**
VEHICLE AXLE SUSPENSION
SUSPENSION D'ESSIEU DE VEHICULE

(30) Priorität: 04.01.1999 DE 19900087; 13.07.1999 DE 29911920 U
(43) Veröffentlichungstag der Anmeldung: 10.10.2001
(73) Patentinhaber: Otto Sauer Achsenfabrik Keilberg, 63856 Bessenbach-Keilberg (DE)
(72) Erfinder: BÜTTNER, Josef, D-63857 Waldaschaff (DE)
(74) Vertreter: KEIL & SCHAAFHAUSEN Patentanwälte
(86) Internationale Anmeldenummer: PCT/EP2000/000005
(87) Internationale Veröffentlichungsnummer: WO 2000/040431

(56) Entgegenhaltungen:
- EP-A- 0 250 820
- EP-A- 0 578 326
- DE-C- 19 607 804
- FR-A- 2 672 354
- GB-A- 837 358
- GB-A- 935 831
- GB-A- 964 138
- US-A- 2 960 333

## Beschreibung

Die Erfindung bezieht sich auf eine Achsaufhängung für luftgefederte Nutzfahrzeuge und dgl..

Aus der DE-C-196 07 804 ist eine Achsaufhängung bekannt, welche einen Faltenbalg und einen Rollbalg aufweist. Der Durchmesser des Faltenbalges ist größer als der wirksame Durchmesser des Rollbalges. Ein Anschlag für die Begrenzung der Einfederung des Rollbalges besteht aus dem unteren Rand eines äußeren Führungsteils und einem mit diesem zusammenwirkenden Außenflansch. Hierdurch soll die Aufgabe gelöst werden, eine Luftfeder derart auszugestalten, dass sie einen geringeren Bauraum benötigt, einen gleichmäßigen weichen Anstieg der Federkernlinie gewährt und die Federwertverhärtung bei kleinen Amplituden auf einen für den Fahrkomfort erträglichen Wert reduziert. Der Faltenbalg legt sich beim Einfedern um eine abgerundete obere Endkante eines zwischen Ringbalg und Rollbalg vorgesehenen Stützringes für den Ringbalg. Der Einfederungsweg einer solchen Achsaufhängung genügt in der Praxis häufig nicht den Anforderungen.

Aus der GB-A-837 358 ist eine Befestigung des Rollbalges einer Luftfeder, welche aus einem nach außen gewölbten Balgkörper mit an beiden Enden vorgesehenen Ringwülsten steht, an diese Wülste umfassenden Haltegliedern bekannt, bei welcher die Innendurchmesser der Ränder der Halteglieder kleiner sind als die Außendurchmesser der schnappend in die Ränder hinein zudrückenden Wülste. Hierdurch soll die Luftfeder rasch in ihre Tragvorrichtung eingebaut und leicht wieder entfernt werden können, ohne dass die Leistungsfähigkeit und die Lebensdauer der Luftfeder beieinträchtigt werden. Die Konstruktion ist so getroffen, dass sich der Luftfederbalg nicht auf der Außenumfangsfläche des Behälters abrollen kann und der Achsfederweg begrenzt ist.

Bei der Fahrzeug-Luftfeder nach der EP-A-0 250 820 sind ein oberer Tauchkolben und ein unterer Tauchkolben über einen Luftfederbalg miteinander verbunden. Der Luftfederbalg hat eine größere Länge als der Abstand zwischen den beiden Kolben in der Fahrposition, so dass sich der Luftfederbalg beim Einfedern an seinen beiden gegenüberliegenden Enden auf die Tauchkolben rollen kann. Dies setzt eine Veränderung herkömmlicher Montageplatten voraus.

Bei der aus der DE-A-42 01 629 bekannten Achsaufhängung ist wenigstens je eine Blattfederanordnung beidseits der senkrechten Fahrzeuglängsmittelebene vorgesehen, welche an ihrem vorderen Ende an einem chassisfesten Lager angelenkt und im Abstand davon starr mit einem Achskörper verbunden ist und auf deren hinteren freien Ende sich das Fahrzeugchassis über die Luftfeder abstützt. Ziel der vorbekannten Achsaufhängung war es, möglichst grosse Achsfederwege von bis 450 mm zu ermöglichen. Dies ist bei dem bekannten Vorschlag dadurch erreicht, dass die geometrische Tauchkolben-Mittelachse und im wesentlichen der Tauchkolbenmantel - vom Lagerpunkt aus gesehen - konkav gekrümmt sind. Aufgrund des hierdurch vorgegebenen günstigeren Bewegungsablaufs wird erreicht, dass der kritische Abstand der oberen inneren Ecke des Tauchkolbens von dem Luftfederbalg grösser wird. Dadurch können grössere Achsfederwege erreicht werden. Ferner ist aus einem Vergleich der Tauchkolbenkennlinien (Achslast über Achsfederweg) erkennbar, dass bei der Verwendung derart gekrümmter Tauchkolben bei gleichem Balgdruck die Achslast über einen längeren Achsfederweg gehalten wird als bei Luftfederungen mit geradem Tauchkolben. Hierdurch wird ein sicherer Hebevorgang eines beladenen Fahrzeuges gewährleistet.

Es hat sich gezeigt, dass z. B. für den Einsatz von Achsaufhängungen für Fahrzeuge im Wechselverkehr, also bspw. bei Wechselverkehrsanhängern bzw. Wechselverkehrssattelaufliegern, ein Bedarf nach noch grösseren Achsfederwegen besteht, um sehr unterschiedliche Abstellhöhen bedienen zu können, welche sich um mehr als 450 mm unterscheiden.

Aufgabe der vorliegenden Erfindung ist es, der Forderung nach einem größeren Achsfederweg bei einer Achsaufhängung der gattungsgemässen Art auf einfachere Weise Rechnung zu tragen.

Gelöst wird diese Aufgabe bei einer Achsaufhängung mit den Merkmalen des Anspruchs 1.

Diese Lösung hat den Vorteil, dass der Luftfederbalg nach wie vor an einer Montageplatte festgelegt und, bei Verwendung des gleichen Tauchkolbens, also gleicher Blockhöhe, aber um wenigstens zweimal die Höhe des jeweiligen Kragens verlängertem Luftfederbalg, der maximale Balgfederweg um wenigstens zweimal die Höhe des jeweiligen Kragens vergrößert werden kann, und um wenigstens einmal die Höhe des jeweiligen Kragens, wenn bei um wenigstens einmal die Höhe des jeweiligen Kragens gekürztem Tauchkolben ein um wenigstens einmal die Höhe des jeweiligen Kragens verlängerter Luftfederbalg verwendet wird, indem beim Einfedern der Luftfederbalg auf der Außenumfangsfläche des jeweiligen Kragens abrollen kann.

In Ausgestaltung des Erfindungsgedankens ist wenigstens einer der Kragen, wie der angrenzende Bereich des Luftfederbalges, etwa kreiszylindrisch, z.B. als gesonderter Reif, ausgebildet. Dies dient einer einfachen Herstellung, Bauweise mit geringem Gewicht und zuverlässigen Funktion.

Nach einer besonderen Ausgestaltung der erfindungsgemäßen Achsaufhängung ist vorgesehen, dass bei Erreichen der Blockhöhe während der Absenkung der Chassishöhe durch Entlüftung des Luftfilterbalgs eine auf einer unteren Bodenplatte des Luftfederbalges angebrachter Puffer vor wenigstens einem der Kragen an der Montageplatte anschlägt. Hierdurch wird das Luftfederbalgmaterial geschont.

Ferner ist der Umfangsrand der Montageplatte vorteilhafterweise mittels Umbördelung mit dem oberen Ende des Luftfederbalges verbunden, was einfach auszuführen ist.

Die Kragen sind in unterschiedlichen Abstand von der Montageplatte auf dem Außen umfang des Luftfederbalgs angebracht.

Um einer Beschädigung des Luftfederbalg an den Rändern wenigstens eines der Kragen vorzubeugen, kann der Rand mit einer Abrundung versehen sein.

Erfindungsgemäß gibt es verschiedene Verbindungsmöglichkeiten des wenigstens einen der Kragen mit dem Umfang des Luftfederbalges. Hierzu gehören insbesondere Vulkanisation, Kleben und Einformen.

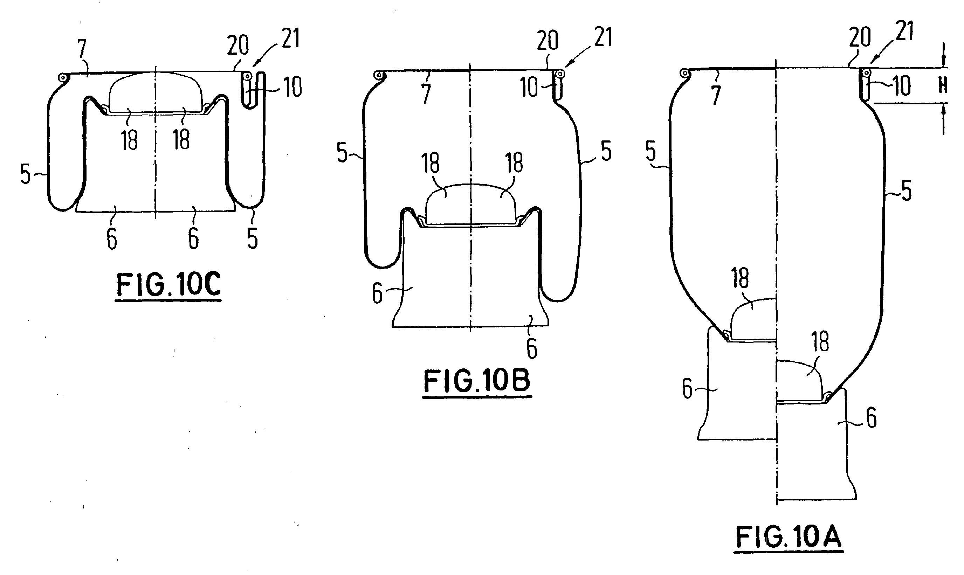

Ausführungsbeispiele der Erfindung werden nachfolgend anhand Fig. 13A und 13B der Zeichnung näher erörtert. Die Fig. 1 bis 12C sollen lediglich das Verständnis der Erfindung erleichtern.

Es zeigen:
- Fig. 1a: im Vertikalschnitt eine Montageplatte mit angeformtem Kragen und einem an letzterem durch Umbördelung befestigten Luftfederbalg für eine erste Balgbefestigungsart,
- Fig. 1b: im Vertikalschnitt eine Montageplatte mit an ihrem Umfangsrand durch Umbördelung befestigten Luftfederbalg und einen diesen umfassenden Kragen für eine zweite Balgbefestigungsart,
- Fig. 2A bis 2C: schematisch in Seitenansicht eine nach dem Stand der Technik ausgebildete Achsaufhängung im Bereich einer Fahrzeugachse, und zwar bei vollständig abgesenktem Fahrzeugchassis (A), bei dem Fahrzeugchassis in Fahrstellung (B) und bei vollständig angehobenem Fahrzeugchassis (C),
- Fig. 3A bis 3C: Darstellungen entsprechend den Fig. 2A bis 2C, jedoch für eine Achsaufhängung mit gleicher Tauchkolbenlänge und entsprechend der Kragenhöhe H vergrößerter Balglänge, bei welcher sich der Luftfederbalg beim Einfedern an seinem oberen Rand über den Kragen der Montageplatte rollt,
- Fig. 4A bis 4C: eine Tauchkolbenanordung nach dem Stand der Technik (jeweils linke Zeichnungshälfte) im Vergleich zu einer Tauchkolbenanordnung (jeweils rechte Zeichnungshälfte) bei der ersten Balgbefestigungsart bei vollständig angehobenem Fahrzeugchassis (A), bei dem Fahrzeugchassis in Fahrstellung (B) einstellbarer Höhe (B) und bei vollständig abgesenktem Fahrzeugchassis (C), wobei trotz Verringerung der Tauchkolbenlänge und damit der Blocklänge der Tauchkolbenanordnung um den Betrag H (H = Höhe des Kragens 10) (Fig. 4C) der gleiche maximale Balgfederweg (Fig. 4A) erzielbar ist,
- Fig. 5A bis 5C: eine Darstellung entsprechend Fig. 4A bis 4C, wobei bei gleicher Tauchkolbenlänge und damit gleicher Blocklänge der Tauchkolbenanordnung (Fig. 5C) durch Vergrößerung der Luftfederbalglänge um den Betrag H (H = Höhe des Kragens 10) der maximale Balgfederweg (Fig. 5A) der ersten Balgbefestigungsart um den Betrag 2H vergrößert wird,
- Fig. 6: im Detail vergrössert den oberen Rand des Luftfederbalges im vollständig abgesenkten Zustand des Fahrzeugchassis zur Erläuterung der Funktionsweise einer Achsaufhängung,
- Fig. 7: eine Darstellung etwa entsprechend der Fig. 6 gemäss einer weiteren Ausgestaltung der ersten Balgbefestigungsart,
- Fig. 8A und 8B: den oberen Rand des Luftfederbalges im vollständig angehobenen Zustand des Fahrzeugchassis (A) und im vollständig abgesenkten Zustand des Fahrzeugchassis (B) in einer Darstellung entsprechend Fig. 5 und 6 für eine noch weitere Ausgestaltung der ersten Balgbefestigungsart,
- Fig. 9A bis 9C: Darstellungen entsprechend der Fig. 4A bis 4C zur Veranschaulichung der Funktionsweise der Achsaufhängung mit der zweiten Balgbefestigungsart bei gekürztem Tauchkolben,
- Fig. 10A bis 10C: Darstellungen entsprechend der Fig. 5A bis 5C zur Veranschaulichung der Funktionsweise der zweiten Achsaufhängung mit der zweiten Balgbefestigungsart bei erhöhtem Balgfederweg,
- Fig. 11A bsi 11B: die Montageplatte gemäß der zweiten Balgbefestigungsart, geschnitten im Bereich ihres Umfangrandes für drei verschiedene Ausführungsarten,
- Fig. 12A bis 12C: Funktionsdarstellungen entsprechend den Figuren 9A bis 9C, wobei (rechte Seite der jeweiligen Figur) im Vergleich zum Stand der Technik (linke Seite der jeweiligen Figur) den als Reif ausgebildeter Kragen im Abstand von der Montageplatte ein verkürzter Tauchkolben verwendet wird, und
- Fig. 13A und 13B: schematisch im Schnitt einen Luftfederbalg, welcher erfindungsgemäß mit zwei als Reif ausgebildeten Kragen im Abstand voneinander ausgerüstet ist, und zwar vollständig gestreckt (Fig. 13A) und vollständig zusammengefaltet (Fig. 13B).

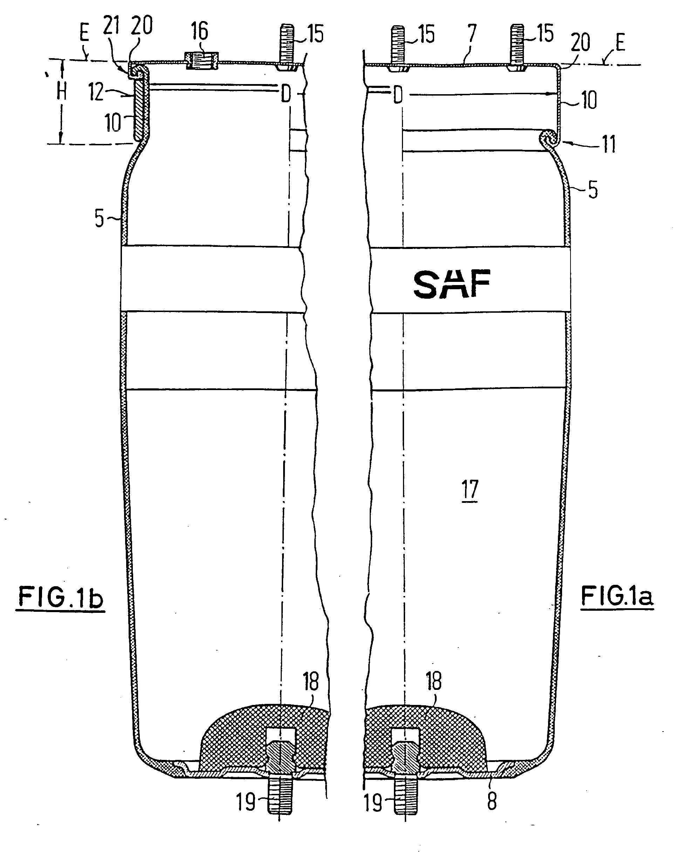

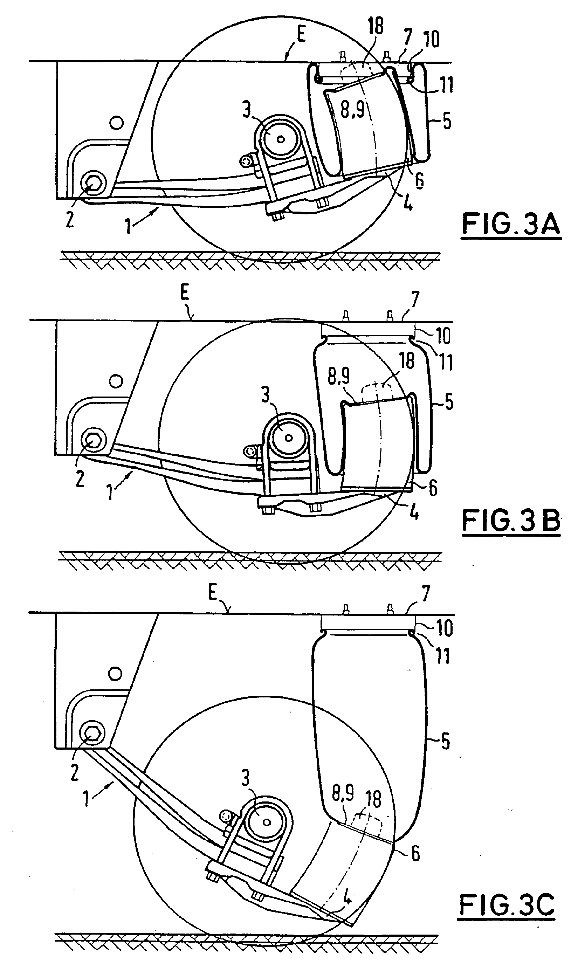

Fig. 1 (rechte Hälfte von Fig. 1) veranschaulicht im Vertikalschnitt einen Luftfederbalg 5, wie er an dem unteren Ende eines hohlzylindrischeh Kragens 10 bspw. mittels Umbördelung 11 befestigt ist. Der Kragen 10 ist dabei einteilig an dem Umfangsrand 20 einer Montageplatte 7 einer Luftfeder für die Achsaufhängung eines Nutzfahrzeuges vorgesehen. Die Umbördelung 11 liegt in einer Ebene, welche einen vorgegebenen Abstand H von der Haupterstreckungsebene E der im wesentlichen kreisscheibenförmigen Montageplatte 7 hat. Die Montageplatte 7 ist mit Hilfe von Gewindebolzen 15 an dem Fahrzeugchassis des luftgefederten Nutzfahrzeuges (vgl. die Fig. 3A bis 3C) befestigbar. In der Montageplatte 7 ist gleichzeitig ein Durchlassstutzen 16 für die Be- und Entlüftung des Balginnenraums 17 vorgesehen. Das obere Ende des Luftfederbalgs 5, der Kragen 10 und die Montageplatte 7 haben etwa den gleichen Durchmesser D.

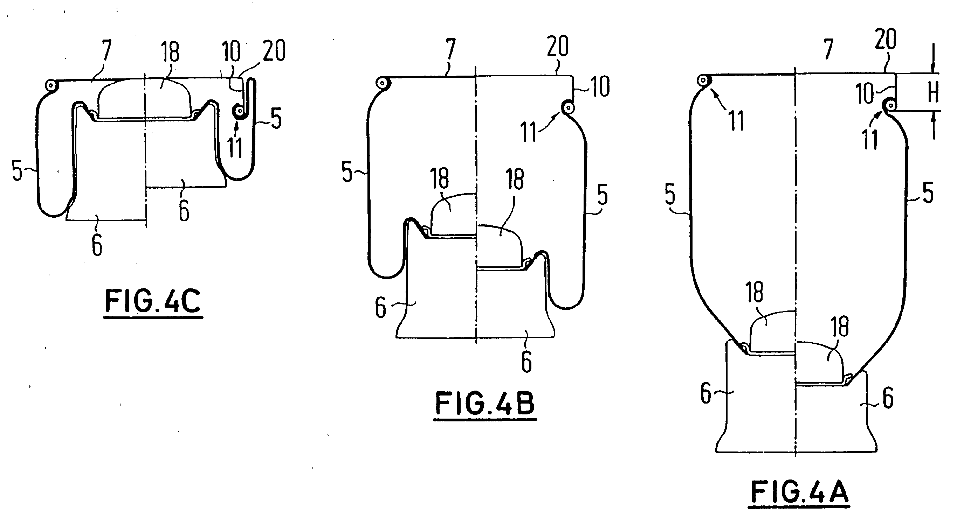

Am unteren Ende des sich im dargestellten Fall etwas nach unten verjüngenden Luftfederbalgs 5 ist eine Bodenplatte 8 einvulkanisiert, auf welcher ein Puffer 18 befestigt ist. Der Puffer 18 schlägt bei vollständiger Entlüftung des Luftfederbalgs 5 (vgl. Fig. 3A) an der oberen Montageplatte 7 an. Der Puffer 18 kann aber auch an der Unterseite der Montageplatte 7 vorgesehen sein, so dass bei Entlüftung die bewegliche Bodenplatte 8 gegen den festsitzenden Puffer 18 anschlägt. In der Bodenplatte 8 ist ferner ein Gewindestutzen 19 befestigt, welcher der Verbindung der Bodenplatte 8 und damit des unteren Endes des Luftfederbalges 5 mit einem Tauchkolben 6 von gekrümmter (vgl. die Fig. 3A bis 3C) oder gerader, etwa glockenförmiger Gestalt (vgl. die Fig. 4A bis 4C) dient.

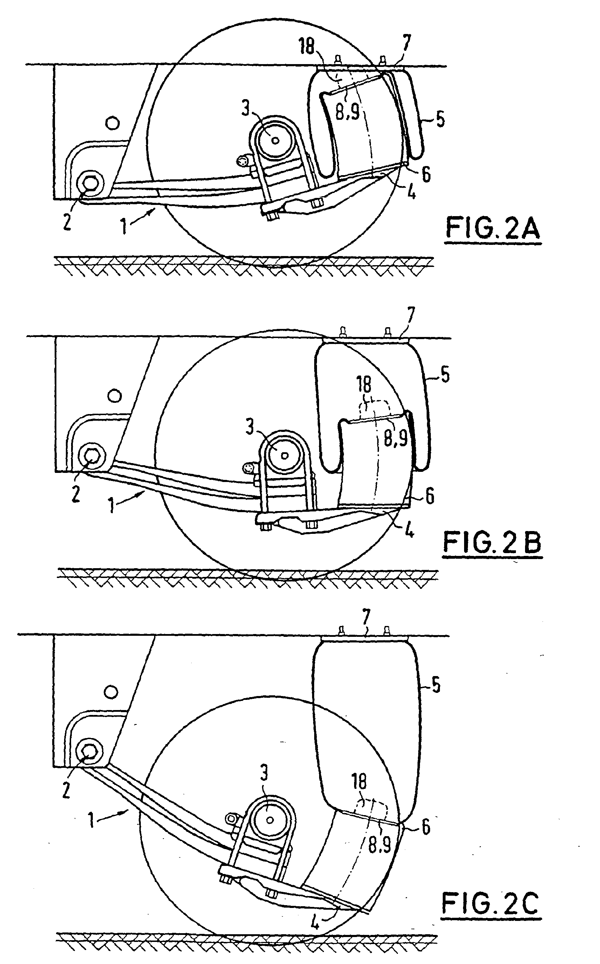

Der so an der Montageplatte 7 befestigte Luftfederbalg 5 bildet zusammen mit dem in Fig. 1a nicht dargestellten Tauchkolben eine als Tauchkolbenanordnung ausgebildete Luftfeder z. B. einer Achsaufhängung für luftgefederte Nutzfahrzeuge und dgl., wie sie entsprechend dem Stand der Technik in den Fig. 2A bis 2C veranschaulicht ist; eine solche Luftfeder eignet sich jedoch auch für andere luftgefederte Achsaggregate.

Bei der Achsaufhängung gemäß Fig. 1 b ist der Luftfederbalg 5 in herkömmlicher Weise an dem Umfangsrand 20 der Montageplatte 7 durch Umgörderlung 21 befestigt. An die Umbördelung 21 angrenzend umfasst der Luftfederbalg 5 einen als selbständigen Ring ausgebildeten Kragen 10.

Eine an sich bekannte Achsaufhängung der in den Fig. 2A bis 2C dargestellten Art hat wenigstens je eine Blattfederanordnung 1 beidseits der senkrechten Fahrzeuglängsmittelebene, welche an ihrem vorderen Ende an einem chassisfesten Lager 2 angelenkt und im Abstand davon starr mit dem Achskörper 3 verbunden, vorzugsweise verspannt ist. Auf dem hinteren Ende 4 der Blattfederanordnung 1 stützt sich das in den Fig. 2A bis 2C nicht dargestellte Fahrzeugchassis über eine als Tauchkolbenanordnung ausgebildete, den vorzugsweise zylindrischen für die Abstützung und Führung des Luftfederbalgs 5 bestimmte Tauchkolben 6 aufweisende Luftfeder ab. Die Fig. 2A bis 2C veranschaulichen auch, wie der Luftfederbalg 5 über die Montageplatte 7 mit dem darauf ruhenden Fahrzeugchassis und z. B. über die untere Bodenplatte 8 mit einem Oberboden 9 des Tauchkolbens 6 verbunden ist. Der Tauchkolben 6 stützt sich seinerseits auf dem hinteren freien Ende 4 der Blattfederanordnung 1 ab. Die Fig. 2A bis 2C veranschaulichen jeweils verschiedene Positionen der Blattfederanordnung, wobei in Fig. 2A diejenige Position der Blattfederanordnung 1 relativ zu dem Fahrzeugchassis veranschaulicht ist, in welcher das Fahrzeugchassis am meisten abgesenkt ist, der Tauchkolben 6 also über den oberen Puffer 18 an der Montageplatte 7 anschlägt. Fig. 2C zeigt diejenige gestreckte Gestalt, welche der Luftfederbalg 5 einnimmt, wenn die Blattfederanordnung 1 zur Erreichung des größtmöglichen Balg- und damit Achsfederweges vollständig ausgefahren ist. Der maximale Balg- und damit Achsfederweg wird bestimmt durch die maximale Länge des Luftfederbalgs 5 (gemäß Fig. 2C) zuzüglich der vertikalen Länge des Tauchkolbens 6. Bei herkömmlichen Achsaggregaten können auf diese Weise Achsfederwege von bis zu 450 mm erreicht werden. Eine Grenze ist jedoch dadurch gegeben, dass sich, wie aus Fig. 2A ersichtlich, die kürzeste Länge der Luftfeder 5, 6 im wesentlichen durch die wirksame Länge des Tauchkolbens 6 bestimmt. Würde man mit einer Anordnung gemäss den Fig. 2A bis 2C versuchen, den möglichen Balg- und damit Achsfederweg durch Verlängerung des Tauchkolbens 6 und/oder des Luftfederbalgs 5 zu vergrössern, so wäre für die Unterbringung der Luftfeder 5, 6 in der vollständig abgesenkten Position des Fahrzeugchassis wegen der größeren Blocklänge ein größerer Platzbedarf erforderlich. Aufgrund des zur Verfügung stehenden Raumes unter dem Fahrzeugchassis findet die Möglichkeit der Verlängerung des Tauchkolbens 6 und/oder des Luftfederbalgs 5 ihre Grenze.

Wie aus Fig. 1a und insbesondere den Fig. 3A bis 3C ersichtlich, ist bei dieser Achsaufhängung die Montageplatte 7 mit einem nach unten weisenden Kragen 10 ausgestattet, an deren unterem Ende das obere Ende des Luftfederbalges 5 bspw. durch Umbördelung 11 im Abstand H von der Haupterstreckungsebene E der Montageplatte 7 angebracht ist. Hierdurch wird ohne Veränderung der Länge des Tauchkolbens 6, wie aus Fig. 3A bis 3C ersichtlich, eine Verlängerung des Luftfederbalgs 5 um das Maß H ermöglicht. Damit wird der maximal erreichbare Balgfederweg um zweimal H, also zweimal die Höhe des Kragens 10, vergrößert. Dies ist die Folge davon, dass sich beim Entlüften des Luftfederbalgs 5 zur Absenkung des Fahrzeugchassis und zum Eintauchen des Tauchkolbens 6 in den Balginnenraum 17 der Luftfederbalg 5 in seinem oberen Bereich auf die Aussenumfangsfläche 12 des Kragens 10 aufrollt und dort eine doppellagige Faltung bildet.

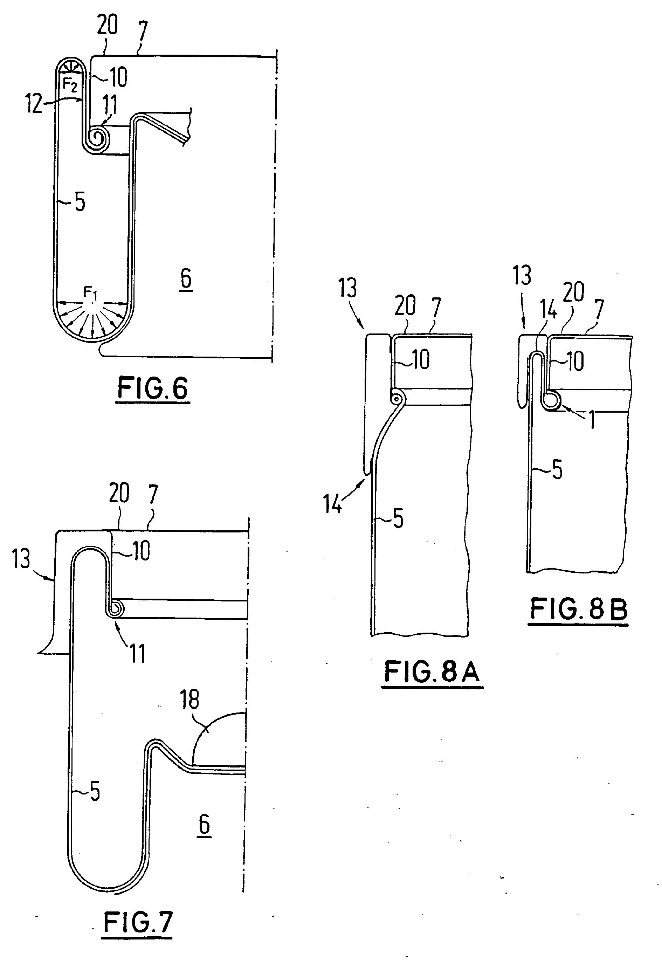

Aus der Detaildarstellung von Fig. 6 erkennt man, dass sich beim Belüften des Luftfederbalgs 5 aufgrund der Flächenverhältnisse zunächst der obere Rand des Luftfederbalgs 5 von der Aussenumfangsfläche 12 des Kragens 10 abrollt, bevor sich der Tauchkolben 6 aus dem Luftfederbalg 5 herausbewegt. Die an dem Tauchkolben 6 anliegende Falte des Luftfederbalges 5 ist nämlich aufgrund der geometrischen Verhältnisse (der Durchmesser des Tauchkolbens 6 ist notwendigerweise geringer als der Durchmesser D des Kragens 10) größer als die an dem Kragen 10 anliegende Falte. Dadurch ist die auf die an dem Tauchkolben 6 anliegende Falte des Luftfederbalgs 5 einwirkende Kraft F₁ grösser als die auf die an der Aussenumfangsfläche 12 des Kragens 10 anliegende Falte einwirkende Kraft F₂. Beim Entlüften des Luftfederbalgs 5, also beim Absenken des Fahrzeugchassis, rollt sich demgemäss zunächst die untere Falte des Luftfederbalgs 5 auf den Tauchkolben 6 und dann die obere Falte über die Außenumfangsfläche 12 des Kragens 10, bis der Tauchkolben 6 über den Puffer 18 seinen oberen Anschlag an der Montageplatte 7 findet.

Aus den Fig. 4A bis 4C lassen sich die Funktionsweise und die Vorteile der mit einer Tauchkolbenanordnung 5, 6 ausgestatteten ersten Achsaufhängung einfach erkennen. In der linken Hälfte der jeweiligen Zeichnungen ist eine Tauchkolbenanordnung 5, 6 gemäss dem Stand der Technik veranschaulicht, in der jeweils rechten eine mit um den Betrag H (H = Höhe des Kragens 10) gekürzten Tauchkolben 6. Fig. 4A zeigt die Konfiguration, in welcher der maximal mögliche Balgfederweg erreicht ist. Gemäss Fig. 4A gehen die Tauchkolbenanordnung 5, 6 nach Stand der Technik und nach der ersten Achsaufhängung also von dem gleichen maximalen Balgfederweg aus.

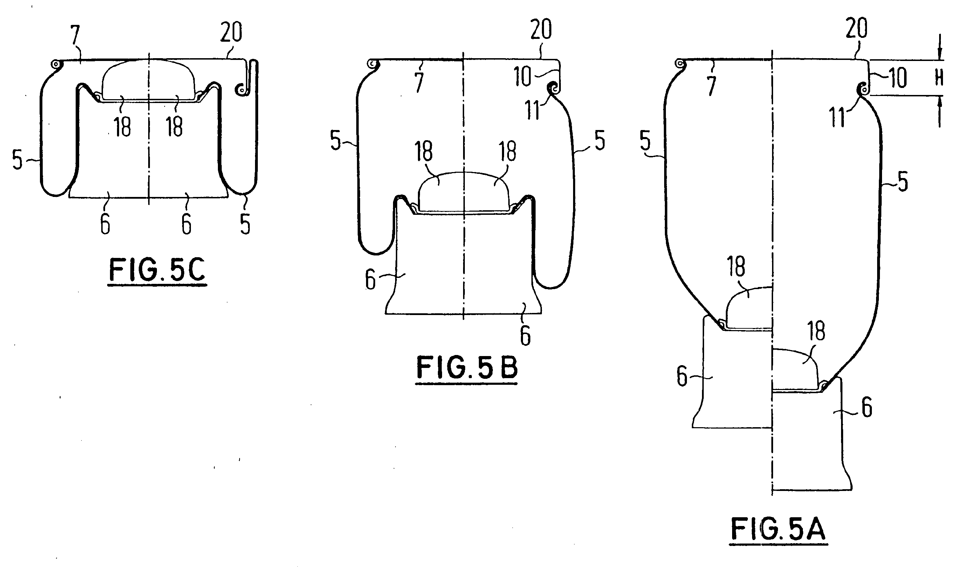

Dies bedeutet, dass ein um die Strecke H bei gleicher Länge des Luftfederbalgs 5 verkürzter Tauchkolben 6 verwendet werden kann. Fig. 4B veranschaulicht die Konfiguration, unter welcher sich die Blattfederanordnung 1 und damit das Achsaggregat des Fahrzeugs in einer mittleren Fahrposition befindet. Fig. 4C veranschaulicht dann schliesslich die jeweils obere Anschlagposition des Tauchkolbens 6, bei welcher der Puffer 18 an der Montageplatte 7 anliegt. Man erkennt daraus, dass bei gleichem maximalen Balgfederweg (Fig. 4A) die Luftfeder erfindungsgemäss in der vollständig entlüfteten Lage (Fig. 4C) eine um die Strecke H verkürzte Blocklänge haben kann. Umgekehrt bedeutet dies, wie in den Fig. 5A bis 5C veranschaulicht, dass bei Verwendung von Tauchkolben 6 gleicher Höhe wegen der Anformung des Kragens 10 an der Montageplatte 7 der Luftfederbalg 5 um das Maß H verlängert werden kann, wodurch bei der Achsaufhängung ein maximaler Balgfederweg erreicht werden kann, welcher um den Betrag zweimal H, also zweimal der Höhe des Kragens 10, vergrössert ist, ohne dass die Blocklänge der Luftfeder in der vollständig entlüfteten Lage zunimmt.

Gemäss Fig. 7 ist am Aussenrand der Montageplatte 7 eine Abdeckung 13 vorgesehen, welche den Bereich der oberen Faltung des Luftfederbalges 5 überkragt. Der Abstand der Aussenwandung der Abdeckung 13 von dem Kragen 10 ist so bemessen, dass die Faltung an der Aussenumfangsfläche 12 des Kragens 10 unter der Abdeckung 13 Platz findet. Auf diese Weise kann verhindert werden, dass sich zwischen der oberen Faltung des Luftfederbalges 5 und dem Kragen 10 Schmutz ansammelt.

Die Fig. 8A und 8B veranschaulichen eine andere Art der Abdeckung 13. Diese ist aus flexiblem Material gefertigt und liegt mit ihrem unteren Umfangsrand 14 an der Wandung des Luftfederbalgs 5 an. Bei der Bildung der oberen Falte des Luftfederbalgs 5 wird der untere Umfangsrand 14 mit der Wandung des Luftfederbalgs 5 mitgenommen und teilweise mit eingerollt. Auch andere Arten der Abdeckung sind natürlich möglich.

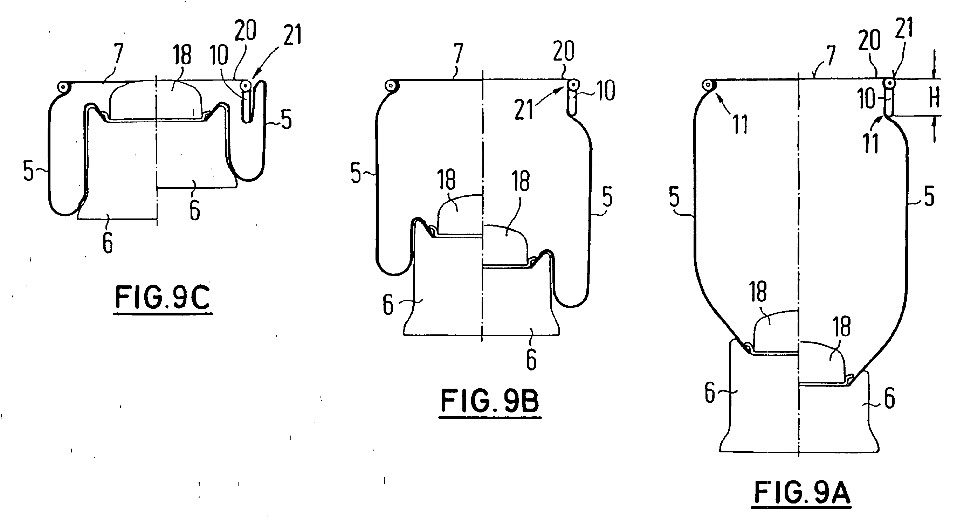

In den Figuren 9A bis 9B ist die Funktionsweise der Tauchkolbenanordnung für die zweite Achsaufhängung, bei welcher der Luftfederbalg 5 unmittelbar am Umfangsrand 20 der Montageplatte 7 angebracht ist, entsprechend den Figuren 4A bis 4C veranschaulicht. Auch hier ist der Tauchkolben 6 (und damit die Blocklänge) um einmal H (=Höhe des selbständigen Kragens 10) gekürzt. Die gleiche maximale Hublänge wie beim Stand der Technik erhält man durch Verlängerung des Luftfederbalges 5 um einmal H.

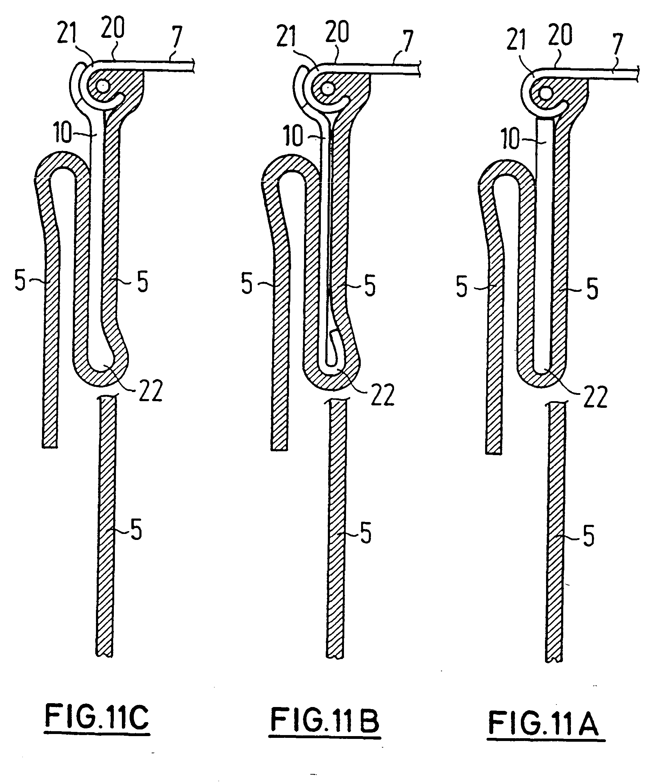

Die Figuren 11A bis 11c zeigen, wie sich der Luftfederbalg 5 an dem als selbständiger Reif ausgebildeter Kragen 10, welcher den Luftfederbalg 5 unmittelbar angrenzend an die Umbördelung 21 des Umfangsrandes 20 der Montageplatte 7 umfasst, auf und abrollt. Die drei Balgbefestigungen unterscheiden sich in ihrem Anlagebereich an der Umbördelung 21 und ihrer Abrundung 22 des Kragens 10 an dessen unterem Ende.

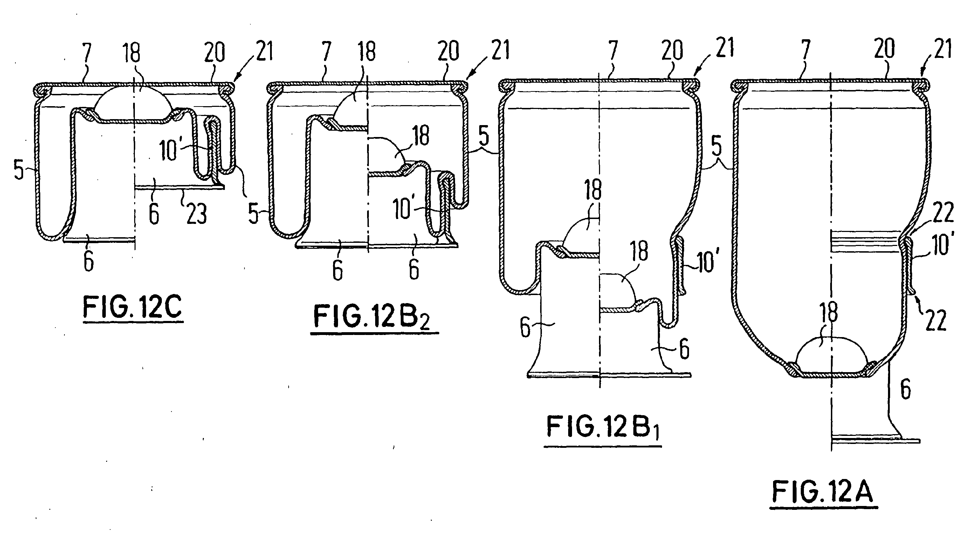

Abweichend von der zweiten Balgbefestigungsart gemäß Figuren 9A und 9C ist bei der zweiten Balgbefestigungsart nach den Figuren 12A bis 12C der Kragen 10' erfindungsgemäß nicht unmittelbar angrenzend an die Montageplatte 7 auf dem Umfang des Luftfederbalges 5 angeordnet, sondern in einem Abstand von der Montageplatte 7. Dabei ist der Abstand so gewählt, dass bei Erreichen der Blockhöhe (Figur 12C) während der Absenkung der Chassishöhe der Puffer 18 an der Montageplatte 7 anschlägt und nicht der Kragen 10' mit dem darüber liegenden Luftfederbalgmaterial, um dieses zu schonen. Der im Abstand von der Montageplatte 7 auf dem Umfang des Luftfederbalges 5 aufgenommene Kragen 10' kann dort durch Vulkanisation und auf andere Weise, z.B. auch durch Kleben, Einformung und dergleichen, verbunden sein. Während die Darstellungen gemäß der Figuren 12B1 und 12B2 zwei unterschiedliche Fahrhöhen veranschaulichen, ist in Figur 12A der maximale Balgfederweg gezeigt. Der Tauchkolben 6 hat erfindungsgemäß eine untere Abstützplatte 23 als Auflage für den Kragen 10'.

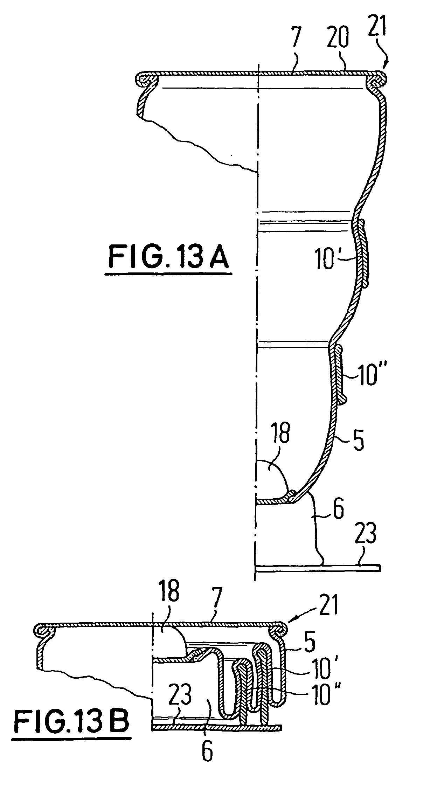

Die Figuren 13A und 13B zeigen eine erfindungsgemäße Ausgestaltung der zweiten Achsaufhängung, wobei zwei Kragen 10', 10" in unterschiedlichem Abstand von der Montageplatte 7 auf dem Außenumfang des Luftfederbalges 5 angebracht sind. Figur 13A zeigt dabei den vollständig gestreckten Zustand des Luftfederbalgs 5, Figur 13B dagegen den vollständig zusammengefalteten Luftfederbalg 5, wobei das Polster 18 entsprechend der gewünschten Blockhöhe an der Montageplatte 7 anschlägt, bevor die beiden Kragen 10', 10" dorthin gelangen könnten. Beide Kragen 10', 10" stützen sich erfindungsgemäß nach unten auf der Stützplatte 23 des Tauchkolbens 6 ab. Aufgrund der hierbei erreichten doppelten Faltung des Luftfederbalgs 5 ist das Verhältnis von maximalem Balgfederweg (Figur 13A) zu Blockhöhe (Figur 13B) noch günstiger. Bei Bedarf können auch mehr als zwei Kragen in Abstand übereinander vorgesehen sein.

Die Ausgestaltungen der Achsaufhängung gemäß den Figuren 12A bis 13B haben außer der einfachen Befestigung des Luftfederbalgs 5 am Umfangsrand 20 der Montageplatte 7 den weiteren Vorteil, dass sich kein Schmutz in den Faltungen sammeln kann, also auch keine gesondere Abdeckung erforderlich ist.

### Bezugszeichenliste:

- 1: Blattfederanordnung
- 2: Lager
- 3: Achskörper
- 4: hinteres freies Ende
- 5: Luftfederbalg
- 6: Tauchkolben
- 7: Montageplatte
- 8: Bodenplatte
- 9: Oberboden
- 10: Kragen
- 11: Umbördelung
- 12: Aussenumfangsfläche
- 13: Abdeckung
- 14: Umfangsrand
- 15: Gewindebolzen
- 16: Durchlassstutzen
- 17: Balginnenraum
- 18: Puffer
- 19: Gewindestutzen
- D: Durchmesser des Kragens 10
- E: Haupterstreckungsebene der Montageplatte 7
- F₁: Kraft
- F₂: Kraft
- H: Höhe des Kragens 10

## Patentansprüche

1. Achsaufhängung für luftgefederte Nutzfahrzeuge und dgl., bei welchem sich das Fahrzeugchassis über eine als Tauchkolbenanordnung ausgebildete, einen zylindrischen, für die Abstützung und Führung eines Luftfederbalges (5) bestimmten Tauchkolben (6) aufweisende Luftfeder abstützt, wobei der Luftfederbalg (5) über eine obere Montageplatte (7) mit dem darauf ruhenden Fahrzeugchassis und an seinem unteren Ende mit einem Oberboden (9) des Tauchkolbens (6) verbunden ist, welcher sich auf einer Federanordnung (1) abstützt, wobei der Luftfederbalg (5) an dem Umfangsrand (20) der Montageplatte (7) befestigt ist, wobei wenigstens zwei Kragen (10', 10") in unterschiedlichem Abstand von der Montageplatte (7) auf dem Außenubenumfang des Luftfederbalges angebracht sind, wobei der Tauchkolben (6) eine Stützplatte (23) aufweist, auf welcher sich die Kragen (10', 10") im eingefederten Zustand nach unten abstützen, und wobei sich der Luftfederbalg (5) beim Einfedern über die Außenumfangsfläche der Kragen (10', 10") abrollt.

2. Achsaufhängung nach Anspruch 1, **dadurch gekennzeichnet, dass** wenigstens einer der Kragen (10, 10', 10") etwa kreiszylindrische Form wie der Luftfederbalg (5) hat.

3. Achsaufhängung nach Anspruch 1 oder 2, **dadurch gekennzeichnet, dass** bei Erreichen der Blockhöhe während der Absenkung der Chassishöhe durch Entlüftung des Luftfederbalges (5) ein auf einer unteren Bodenplatte (8) des Luftfederbalges (5) angebrachter Puffer (18) vor wenigstens einem der Kragen (10, 10', 10") an der Montageplatte (7) anschlägt.

4. Achsaufhängung nach einem der Ansprüche 1 bis 3, **dadurch gekennzeichnet, dass** der Umfangsrand (20) der Montageplatte (7) mittels Umbördelung (21) mit dem oberen Ende des Luftfederbalges (5) verbunden ist.

5. Achsaufhängung nach einem der vorhergehenden Ansprüche, **dadurch gekennzeichnet, dass** wenigstens einer der Kragen (10', 10") an einem frei liegenden Rand eine Abrundung (22) aufweist.

6. Achsaufhängung nach einem der vorhergehenden Ansprüche, **dadurch gekennzeichnet, dass** wenigstens einer der Kragen (10', 10") mit dem Umfang des Luftfederbalges (5) durch Vulkanisation, Kleben, Einformen oder dgl. verbunden ist.

## Claims

1. An axle suspension for air-cushioned commercial vehicles and the like, wherein the vehicle frame is supported via an air spring formed as a plunger assembly comprising a cylindrical plunger (6) intended to support and guide an air spring bellow (5), with the air spring bellow (5), via an upper mounting plate (7) being connected to the vehicle frame resting thereon and, at the lower end thereof being connected to an upper bottom (9) of the plunger (6) supported on a spring assembly (1), with the air spring bellow (5) being secured to the circumferential rim (20) of the mounting plate (7) and at least two collars (10', 10") being provided at varying distances from the mounting plate (7) on the outer circumference of the air spring bellow, with the plunger (6) being provided with a mounting plate (23) on which the collars (10', 10"), in suspended condition, are downwardly supported, and with the air spring bellow (5), during suspension, rolling along the outer circumferential face of the collars (10', 10").

2. An axle suspension according to claim 1, **characterized in that** at least one of said collars (10, 10', 10") is of an approximately circular-cylindrical configuration as is the air spring bellow (5).

3. An axle suspension according to claims 1 or 2, **characterized in that** upon reaching the block height during lowering the frame height through ventilating the air spring bellow (5) a buffer (18) provided on a lower bottom plate (8) of the air spring bellow (5) will strike the mounting plate (7) before at least one of the collars (10, 10', 10").

4. An axle suspension according to any one of claims 1 through 3, **characterized in that** the circumferential rim (20) of the mounting plate (7) by means of flange (21) is connected to the upper end of the air spring bellow (5).

5. An axle suspension according to any one of the preceding claims, **characterized in that** at least one of collars (10', 10") at an exposed rim is provided with a rounding (22).

6. An axle suspension according to any one of the preceding claims, **characterized in that** at least one of the collars (10', 10") is connected to the circumference of the air spring bellow (5) by vulcanisation, cementing, fitting or the like.

## Revendications

1. Suspension de l'axe pour des véhicules industriels etc. dans laquelle est supporté le châssis de véhicule a travers d'un ressort d'air sous forme d'un ensemble de plongeur comportant un plongeur (6) cylindrique destiné à supporter et guider un soufflet à ressort d'air (5), le soufflet à ressort d'air (5), à travers d'un panneau de montage (7) supérieur, étant relié au châssis resté sur le dernier et à son extrémité inférieure étant relié au fond supérieur (9) du plongeur (6) supporté sur un ensemble à ressort (1), le soufflet à ressort d'air (5) étant fixé au bord périphérique (20) du panneau de montage (7), au moins deux collet (10', 10") étant prévus à distance différente du panneau de montage (7) sur la périphérie externe du soufflet à ressort d'air, le plongeur (6) comportant un panneau de support (23) sur lequel sont supporté les collets (10', 10") vers le bas dans l'état suspendu et le soufflet à ressort d'air (5) déroulant pendant la suspension à travers les surfaces périphériques extérieures des collets (10', 10").

2. Suspension de l'axe selon la revendication 1, **caractérisé en ce qu'**au moins l'un des collets (10, 10', 10") à peu près est sous forme cylindrique circulaire du soufflet à ressort d'air (5).

3. Suspension de l'axe selon les revendications 1 ou 2, **caractérisé en ce qu'**après l'atteinte de niveau de bloc pendant l'affaissement de l'hauteur de châssis par l'intermédiaire de l'aération du soufflet à ressort d'air (5) un tampon (18) prévu sur un panneau fond (8) inférieur du soufflet à ressort d'air (5) va frapper le panneau de montage (7) avant un moins l'un des collets (10, 10', 10").

4. Suspension de l'axe selon les revendications 1 à 3, **caractérisé en ce que** le bord périphérique (20) du panneau de montage (7) est relié par l'intermédiaire le bord rabattu (21) à l'extrémité supérieure du soufflet à ressort d'air (5).

5. Suspension de l'axe selon l'une des revendications précédentes, **caractérisé en ce qu'**au moins l'un des collets (10', 10") à un bord exposé est prévu d'un arrondissement (22).

6. Suspension de l'axe selon l'une des revendications précédentes, **caractérisé en ce qu'**au moins l'un des collets (10', 10") est relié au circonférence du soufflet à ressort d'air (5) par l'intermédiaire de vulcanisation, collage, formage etc.
